# FASCICULE DE BREVET EUROPEEN

(11) **EP 3 073 182 B1**
(45) Date de publication et mention de la délivrance du brevet: **03.07.2019**
(21) Numéro de dépôt: 16161880.6
(22) Date de dépôt: 23.03.2016
(51) Int. Cl.: F21S 43/14, F21S 43/27, F21S 45/47, F21S 43/237, F21S 45/48

(54) **MODULE LUMINEUX POUR VEHICULE AUTOMOBILE COMPRENANT DEUX GUIDES DE LUMIERE ET UN RADIATEUR COMPRENANT DEUX FACES DE MONTAGE**
LEUCHTMODUL FÜR KRAFTFAHRZEUG, DAS ZWEI LICHTWELLENLEITER UND EINEN RADIATOR MIT ZWEI MONTAGEFLÄCHEN UMFASST
LIGHT MODULE FOR MOTOR VEHICLE COMPRISING TWO LIGHT GUIDES AND A RADIATOR COMPRISING TWO MOUNTING SURFACES

(30) Priorité: 23.03.2015 FR 1552364
(43) Date de publication de la demande: 28.09.2016
(73) Titulaire: VALEO ILUMINACION, 23600 Martos (ES)
(72) Inventeur: MOISY, Eric, 23009 JAEN (ES); FERNANDEZ, Ricardo, 23600 MARTOS (ES); LOMAS, Jose-Manuel, 23009 JAEN (ES); MORENO, Juan-Francisco, Torremolinos 29620 (ES); CABANNE, Damien, 23600 MARTOS (ES); HUAU, Mickael, 49140 LA CHAPELLE SAINT LAUD (FR); COZ, François, 49140 Villevêque (FR); MARTINEZ, Juan Manuel, 18014 GRANADA (ES)

(56) Documents cités:
- EP-A1- 2 775 197
- EP-A2- 2 592 333
- KR-B1- 100 993 226
- US-A1- 2011 205 737
- US-A1- 2012 051 077
- US-A1- 2012 069 592

## Description

### DOMAINE TECHNIQUE DE L'INVENTION

La présente invention concerne un module lumineux pour véhicule automobile.

Elle trouve une application particulière mais non limitative dans les dispositifs d'éclairage, tels que des projecteurs de véhicule automobile.

### ARRIÈRE-PLAN TECHNOLOGIQUE DE L'INVENTION

Un module lumineux pour véhicule automobile, et notamment pour un projecteur de véhicule automobile, comprend de manière connue de l'homme du métier :
- un radiateur comportant une face plane ;
- deux guides de lumière comprenant chacun une face d'entrée et une branche ;
- une pluralité de sources lumineuses disposées sur le radiateur au niveau des faces d'entrée de chaque guide de lumière, une face d'entrée étant adaptée pour coupler les rayons lumineux émis par lesdites sources lumineuses dans le guide de lumière.
Les faces d'entrée des guides de lumières sont disposées sur un plan parallèle à la face plane du radiateur. Les branches des deux guides de lumières sont ainsi en parallèle l'une par rapport à l'autre.

Un inconvénient de cet état de la technique est que selon l'agencement des guides de lumière dans le projecteur, leur face d'entrée ne peut pas être toujours disposée sur un plan parallèle à la face plane du radiateur. Cela engendre des pertes de lumière au niveau de la face d'entrée de chaque guide. Les guides sont en conséquence moins efficaces.

Il est par ailleurs connu du document US 2011/205737 un dispositif comportant un radiateur pourvu de portions de montage sur lesquelles sont montées des unités lumineuses et un guide de lumière disposé sur un support distinct du radiateur. Ce dispositif présente comme défaut d'introduire une pièce support qui vient nécessairement allonger la chaine de cote entre ce guide de lumière et les unités lumineuses, ce qui diminue donc la précision de positionnement des unités lumineuses vis-à-vis du guide.

Le document KR 10099326 B divulgue un module lumineux comportant un radiateur, deux guides de lumière, et deux sources lumineuses.

Dans ce contexte, la présente invention vise à résoudre les inconvénients précédemment mentionnés.

### DESCRIPTION GENERALE DE L'INVENTION

A cette fin l'invention propose un module lumineux pour véhicule automobile comprenant :
- un radiateur comprenant au moins deux faces de montage faisant un angle entre elles ;
- au moins deux guides de lumière chacun comprenant une face d'entrée et une branche ;
- au moins deux sources lumineuses, chacune disposée au niveau d'une desdites faces d'entrée des guides de lumière qui lui est associé ;
dans lequel chaque face d'entrée est disposée en regard de l'une des faces de montage dudit radiateur et est adaptée pour coupler les rayons lumineux émis par la source lumineuse dans le guide de lumière associé
et chaque guide de lumière est monté directement sur l'une des faces de montage dudit radiateur qui lui est associée.

Ainsi, comme on va le voir en détail ci-après, en utilisant un radiateur à deux faces de montage, cela permet d'avoir une conception et une disposition flexible des guides de lumière dans le projecteur. En effet, les deux faces de montage présentant un angle entre elles, elles permettent d'avoir toujours les faces d'entrée des guides de lumières disposées sur un plan parallèle auxdites faces de montage. Il n'y a ainsi pas de pertes de lumière. On peut ainsi adapter l'angle entre les deux faces de montage du radiateur en fonction de la disposition des guides de lumière dans le projecteur.

Selon des modes de réalisation non limitatifs, le module lumineux peut comporter en outre une ou plusieurs caractéristiques supplémentaires parmi les suivantes :
Dans un mode de réalisation non limitatif, les guides sont distincts et les branches sont distinctes et elles s'étendent selon des directions distinctes.

Dans un mode de réalisation non limitatif, les faces de montage sont planes.

Dans un mode de réalisation non limitatif, les faces de montage s'étendent d'un même côté du radiateur.

Dans un mode de réalisation non limitatif, le radiateur comporte des ailettes de refroidissement disposées d'un côté opposé à celui des faces de montage.

Dans un premier mode de réalisation non limitatif, l'ensemble source(s) lumineuse(s) et guide de lumière associé est adapté pour émettre de la lumière blanche pour la réalisation d'une première fonction photométrique. Dans un deuxième mode de réalisation non limitatif, l'ensemble source(s) lumineuse(s) et guide de lumière associé est adapté pour émettre de la lumière ambre pour la réalisation d'une deuxième fonction photométrique. Dans un troisième mode de réalisation non limitatif, l'ensemble source(s) lumineuse(s) et guide de lumière associé est adapté pour émettre de la lumière blanche pour la réalisation d'une première fonction photométrique et de la lumière ambre pour la réalisation d'une deuxième fonction photométrique.

Dans une variante non limitative, la première fonction photométrique est une fonction DRL pour réaliser un feu diurne.

Dans une variante non limitative, la deuxième fonction photométrique est une fonction ID pour réaliser un indicateur de direction.

Dans un mode de réalisation non limitatif, une pluralité de sources lumineuses est disposée au niveau d'une desdites faces d'entrée des guides de lumière qui lui est associé.

Dans un mode de réalisation non limitatif, ledit angle est strictement supérieur à 0°, notamment strictement inférieur à 1 80°

Dans un mode de réalisation non limitatif, une face d'entrée est disposée en regard d'une face de montage dudit radiateur selon un axe sensiblement perpendiculaire à ladite face de montage.

Dans un mode de réalisation non limitatif, ledit module lumineux comprend en outre au moins une carte à circuit imprimé à laquelle sont connectées lesdites sources lumineuses.

Dans une variante de réalisation non limitative, le module lumineux comprend deux cartes à circuit imprimé auxquelles sont connectées respectivement les sources lumineuses de chaque guide de lumière associé.

Selon ce premier mode, dans une première variante de réalisation non limitative, ladite au moins une carte à circuit imprimé est montée directement sur une face de montage dudit radiateur.

Selon ce premier mode, dans une deuxième variante de réalisation non limitative, la carte à circuit imprimé est montée sur une troisième face de montage dudit radiateur, différente des faces de montage en regard desquelles sont disposées les guides de lumière.

La carte à circuit imprimé est montée sur une face de montage du radiateur de sorte à s'étendre à distance de l'endroit vis-à-vis duquel est disposé le guide de lumière.

Selon ce premier mode, dans un mode de réalisation non limitatif, au moins une source lumineuse est montée directement sur chaque face de montage dudit radiateur.

Selon ce premier mode, dans une variante de réalisation non limitative, ladite au moins une source lumineuse est connectée à ladite carte à circuit imprimé au moyen d'un pontage via un fil métallique.

Dans un deuxième mode de réalisation non couvert par l'invention, ledit module lumineux comprend en outre un élément de support comprenant deux faces support qui se superposent respectivement sur les deux faces de montage dudit radiateur, chaque guide de lumière étant monté directement sur l'une desdites faces support qui lui est associée.

Selon ce deuxième mode, dans un mode de réalisation non couvert par l'invention, ladite au moins une carte à circuit imprimé forme ledit élément de support.

Selon une variante de réalisation non limitative, la carte à circuit imprimé comporte deux parties qui sont les deux faces support et qui sont reliées entre elles via un élément de connexion.

Selon ce deuxième mode, dans un mode de réalisation non limitatif, les sources lumineuses sont montées sur ladite au moins une carte à circuit imprimé.

Dans un mode de réalisation non limitatif, les sources lumineuses sont des puces émettrices semi-conductrices.

Dans une variante de réalisation non limitative, une puce émettrice semiconductrice fait partie d'une diode électroluminescente.

Dans un mode de réalisation non limitatif, chaque face de montage du radiateur comprend un premier moyen de référencement et chaque guide de lumière comprend en outre un moyen complémentaire de référencement coopérant avec le premier moyen de référencement.

Selon une variante de réalisation non limitative, les premiers moyens de référencement sont des orifices de référencement, et les moyens complémentaires de référencement sont des pions de référencement.

Selon une autre variante, les premiers moyens de référencement comportent un composant électronique soudé sur une carte à circuit imprimé.

Dans un mode de réalisation non limitatif, chaque face support de l'élément de support comprend un deuxième moyen de référencement et chaque guide de lumière comprend en outre un moyen complémentaire de référencement coopérant avec le deuxième moyen de référencement.

Dans un mode de réalisation non limitatif, ledit module lumineux comprend en outre une bride de fixation positionnée sur une partie des guides de lumière.

Dans un mode de réalisation non limitatif, la bride de fixation comprend un premier orifice de fixation disposé en regard d'un deuxième orifice de fixation dudit radiateur.

Il est également proposé un dispositif d'éclairage pour véhicule automobile comprenant un module lumineux selon l'une quelconque des caractéristiques précédentes, et comprenant en outre un boîtier comportant une face avant du côté de laquelle sont disposés les guides de lumière et une face arrière sur laquelle est monté ledit radiateur, ledit boîtier comportant une ouverture dans laquelle sont insérées les deux faces de montage dudit radiateur.

### BREVE DESCRIPTION DES FIGURES

L'invention et ses différentes applications seront mieux comprises à la lecture de la description qui suit et à l'examen des figures qui l'accompagnent.
- la figure 1 représente un éclaté d'un module lumineux pour véhicule automobile selon un premier mode de réalisation non limitatif de l'invention, ledit module lumineux comprenant un radiateur et deux guides de lumière, chacun comprenant une face d'entrée et une branche ;
- la figure 2 représente le module lumineux de la figure 1 assemblé selon un mode de réalisation non limitatif ;
- la figure 3 est un schéma de sources lumineuses agencées au niveau d'une face d'entrée d'un guide de lumière des figures 1 et 2 selon un premier mode de réalisation non limitatif ;
- la figure 4 est un schéma de sources lumineuses agencées au niveau d'une face d'entrée d'un guide de lumière des figures 1 et 2 selon un deuxième mode de réalisation non limitatif ;
- la figure 5 représente un éclaté d'un module lumineux pour véhicule automobile selon un deuxième mode de réalisation non couvert par l'invention, ledit module lumineux comprenant un radiateur, un élément de support et deux guides de lumière, chacun comprenant une face d'entrée et une branche ;
- la figure 6 représente le module lumineux de la figure 5 assemblé et disposé dans un boîtier d'un dispositif d'éclairage selon un mode de réalisation non limitatif ;
- la figure 7 représente une vue en coupe d'une partie du module lumineux de la figure 6 ;
- la figure 8 représente le module lumineux de la figure 5 assemblé et disposé dans un boîtier d'un dispositif d'éclairage, le module lumineux comprenant en outre une bride de fixation selon un mode de réalisation non limitatif ;
- la figure 9 illustre le module lumineux des figures 5 à 7 dans un dispositif d'éclairage pour véhicule automobile ; et
- la figure 10 illustre le boîtier d'un dispositif d'éclairage pour véhicule automobile, adapté pour recevoir un module lumineux des figures 1 à 9.

### DESCRIPTION DE MODES DE REALISATION DE L'INVENTION

Les éléments identiques, par structure ou par fonction, apparaissant sur différentes figures conservent, sauf précision contraire, les mêmes références.

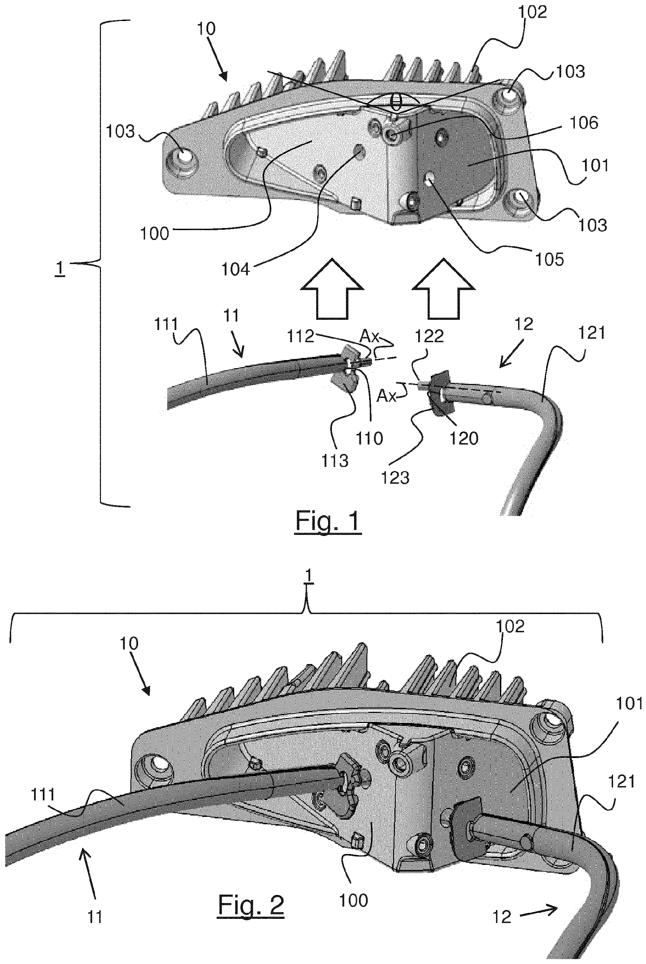

Le module lumineux 1 pour véhicule automobile V selon l'invention est décrit en référence aux figures 1 à 10.

Par véhicule automobile, on entend tout type de véhicule motorisé.

Un dispositif d'éclairage 2 du véhicule automobile V comprend le module lumineux 1. Dans un exemple non limitatif pris dans la suite de la description, le dispositif d'éclairage 2 est un projecteur.

Le module lumineux 1 comprend :
- un radiateur 10 comprenant au moins deux faces de montage 100 et 101 faisant un angle 0 entre elles ;
- au moins deux guides de lumières 11 et 12, chacun comprenant une face d'entrée 110, 120 et une branche 111, 121 ;
- au moins deux sources lumineuses 14, chacune disposée au niveau d'une desdites faces d'entrée 110, 120 des guides de lumière 10 qui lui est associé.

Dans un mode de réalisation non limitatif, le module lumineux 1 comprend en outre au moins une carte à circuit imprimé 13, appelée également carte PCB (« Printed Circuit Board» en anglais) à laquelle sont connectées les sources lumineuses 14.

Les différents éléments du module lumineux 1 sont décrits en détail ci-après.

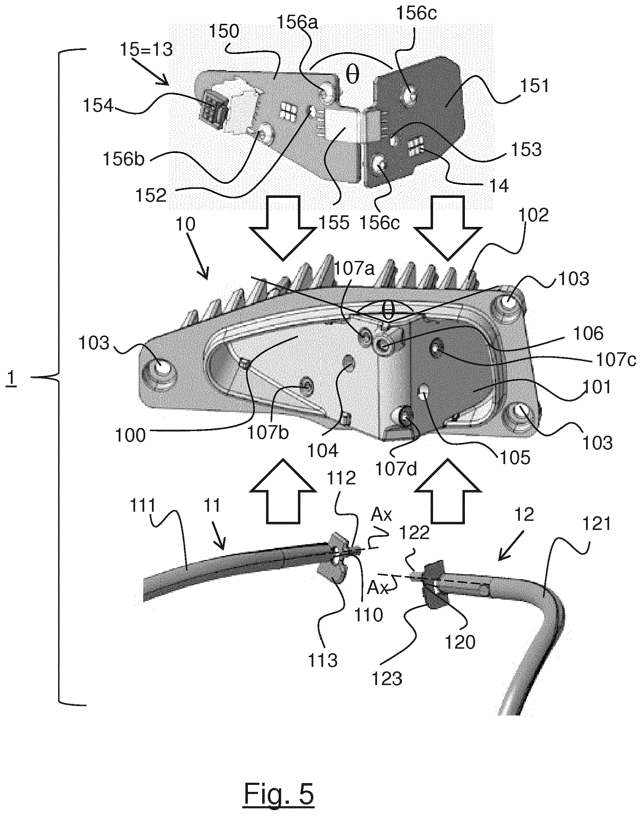

Comme illustré sur les figures 1 et 5 notamment, les guides de lumière 11 et 12 sont distincts et les branches 111 et 121 respectivement des guides de lumière 11 et 12 sont distinctes. Elles s'étendent selon des directions distinctes et se répartissent sur une partie du projecteur 2.

Chaque face d'entrée 110, 120 des guides de lumière 11, 12 est adaptée pour coupler les rayons lumineux émis par la source lumineuse 14 dans le guide de lumière associé 11, 12.

On notera que les guides de lumière 11 et 12 comprennent en outre des éléments de découplage (non illustrés) qui permettent de faire sortir lesdits rayons lumineux sur des faces de sortie (non illustrées) desdits guides de lumière 11, 12. Dans un exemple non limitatif, les éléments de découplage sont des prismes.

Dans un mode de réalisation non limitatif, les sources lumineuses 14 sont des puces émettrices semi-conductrices.

Dans une variante de réalisation non limitative, une puce émettrice semiconductrice fait partie d'une diode électroluminescente.

Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED).

Dans un premier mode de réalisation non limitatif, l'ensemble source(s) lumineuse(s) 14 et guide de lumière 11, 12 associé est adapté pour émettre de la lumière blanche pour la réalisation d'une première fonction photométrique f1.

Dans un exemple non limitatif, la première fonction photométrique f1 est une fonction DRL pour réaliser un feu diurne.

Dans un deuxième mode de réalisation non limitatif, l'ensemble source(s) lumineuse(s) 14 et guide de lumière 11, 12 associé est adapté pour émettre de la lumière ambre pour la réalisation d'une deuxième fonction photométrique f2. Dans un exemple non limitatif, la deuxième fonction photométrique f2 est une fonction ID pour réaliser un indicateur de direction. Dans le cas où plusieurs sources de lumière 14 sont disposées en regard d chaque face d'entrée 111, 121 d'un guide de lumière 11, 12, les première et deuxième fonctions photométriques peuvent être réalisées dans un même projecteur 2.

Ainsi, dans un troisième mode de réalisation non limitatif, l'ensemble source(s) lumineuse(s) et guide de lumière associé est adapté pour émettre de la lumière blanche pour la réalisation d'une première fonction photométrique et de la lumière ambre pour la réalisation d'une deuxième fonction photométrique.

Les guides de lumière 11 et 12 comprennent en outre chacun une base 113 et 123 qui supporte chacune un moyen complémentaire de référencement 112 et 122. Les bases 113, 123 sont disposées respectivement sur un plan parallèle aux faces d'entrée 110, 120 des guides de lumière 11 et 12.

Comme illustré sur les figures 1 et 5 notamment, le radiateur 10 comprend des ailettes de refroidissement 102. Les deux faces de montage 100 et 101 du radiateur 10 sont sensiblement planes et s'étendent d'un même côté du radiateur 10. Par ailleurs, elles sont disposées d'un côté opposé aux ailettes de refroidissement 102 du radiateur 10.

Les deux faces de montage 100 et 101 permettent de monter respectivement les deux guides de lumière 11 et 12 sur le radiateur 10 que ce soit directement (premier mode de réalisation décrit plus loin) ou via un élément de support (deuxième mode de réalisation décrit plus loin).

A cet effet, dans un mode de réalisation non limitatif, chaque face de montage 100, 101 du radiateur 10 comprend un premier moyen de référencement 104, 105 et chaque guide de lumière 11, 12 comprend en outre un moyen complémentaire de référencement 112, 122 coopérant avec le premier moyen de référencement 104, 105.

Dans un exemple non limitatif, les premiers moyens de référencement 104 et 105 sont des orifices de référencement, et les moyens complémentaires de référencement 112 et 122 sont des pions de référencement.

Plus particulièrement, le pion de référencement 112 est inséré dans l'orifice de référencement 104 de la face de montage 100 tandis que le pion de référencement 122 est inséré dans l'orifice de référencement 105 de la face de montage 101. Cela permet de positionner chaque guide de lumière 11 et 12 correctement par rapport au radiateur 10, et notamment chaque face d'entrée 110 et 120 correctement par rapport aux sources lumineuses 14 associées, et également d'éviter que les guides de lumière 11 et 12 ne bougent.

Ainsi, la face d'entrée 110 du guide de lumière 11 est disposée en regard de la face de montage 100 du radiateur 10, et la face d'entrée 110 du guide de lumière 11 est disposée en regard de la face de montage 100 du radiateur 10.

L'angle θ entre les deux faces de montage 100 et 101 du radiateur 10 est adapté en fonction de la disposition des branches 111 et 121 des guides de lumière 11 et 12 dans le projecteur 2 du véhicule automobile.

Ainsi, dans un mode de réalisation non limitatif, ledit angle θ est strictement supérieur à 0°, notamment strictement inférieur à 1 80°

Cet angle θ permet de disposer les faces d'entrée 110 et 120 en regard respectivement des faces de montage 100 et 101 et selon un axe Ax (illustré sur la figure 1 et sur la figure 5) qui est sensiblement perpendiculaire auxdites faces de montage 100 et 101. Les faces d'entrée 110 et 120 sont ainsi disposées parallèlement respectivement aux faces de montage 100 et 101. Ainsi, le couplage des rayons lumineux émis par les sources lumineuses 14 dans les guides de lumière 11 et 12 est maximisé.

Comme on va le voir ci-après, l'angle θ permet ainsi d'avoir pour le radiateur 10 des plans différents en face desquels ou sur lesquels sont disposées les sources de lumières 14.

### Premier mode de réalisation

La figure 1 représente une vue éclatée du module lumineux 1 selon un premier mode de réalisation non limitatif.

Selon ce mode, chaque guide de lumière 11, 12 est monté directement sur l'une des faces de montage 100, 101 du radiateur 10 qui lui est associée.

Ainsi, le guide 11 est monté sur la face de montage 100 et le guide 12 est monté sur la face de montage 101. Les bases 113 et 123 des guides de lumières 11 et 12 sont directement en contact respectivement avec les faces de montage 100 et 101 du radiateur 10.

La figure 2 illustre le module lumineux 1 avec les guides de lumières 11 et 12 qui sont assemblés directement sur les faces de montage respectives 100 et 101 du radiateur 10. Comme on peut le voir, les branches 111 et 121 des guides de lumière 22 et 12 ont différentes directions.

Selon ce mode, au moins une carte à circuit imprimé 13 (non illustrée sur la figure 1) est montée directement sur une face de montage du radiateur 10.

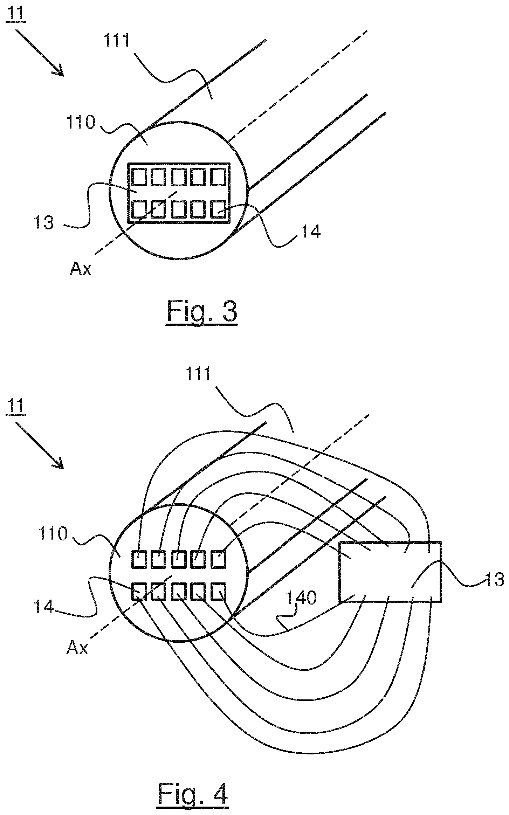

La figure 3 représente schématiquement une partie du guide de lumière 11 selon un premier mode de réalisation non limitatif. On notera que le même schéma s'applique pour le guide de lumière 12. Sur la figure, on peut voir la face d'entrée 110 et une partie de la branche 111 du guide de lumière 11.

Selon ce mode, les sources lumineuses 14 sont montées sur une carte à circuit imprimé 13, le tout étant disposé en regard de la face d'entrée 110 du guide de lumière 11 associé.

Dans l'exemple non limitatif illustré, il y a dix sources lumineuses 14 qui sont montées sur un support commun qui est ainsi la carte à circuit imprimé 13.

Dans ce cas, dans un mode de réalisation non limitatif, une partie des sources lumineuses 14 est adaptée pour émettre de la lumière blanche pour la réalisation de la première fonction photométrique f1 et une autre partie des sources lumineuses 14 est adaptée pour émettre de la lumière ambre pour la réalisation de la deuxième fonction photométrique f2.

Selon ce mode, une carte à circuit imprimé 13 (non illustrée sur la figure 1) est montée directement sur chaque face de montage 100, 101 du radiateur 10. Le montage est effectué par collage dans un exemple non limitatif. Ainsi, le module lumineux 1 comprend une carte à circuit imprimé 13 pour chaque groupe de sources lumineuses 14 d'un guide de lumière 11, 12, soit deux cartes à circuit imprimé 13, un groupe de sources lumineuses 14 comprenant une ou plusieurs sources lumineuses 14.

La figure 4 représente schématiquement une partie du guide de lumière 11 selon un deuxième mode de réalisation non limitatif. On notera que le même schéma s'applique pour le guide de lumière 12. Sur la figure, on peut voir la face d'entrée 110, une partie de la branche 111 du guide de lumière 11 et une carte à circuit imprimé 13 déportée par rapport au guide de lumière 11 de sorte à s'étendre à distance de l'endroit vis-à-vis duquel sont disposés les guides de lumière 11 et 12.

Selon ce mode, au moins une source lumineuse 14 est montée sur chaque face de montage 100, 101 dudit radiateur 10.

Ainsi, les sources lumineuses 14 sont disposées sur un support commun qui est ainsi le radiateur 10.

Dans l'exemple non limitatif illustré, il y a dix sources lumineuses 14 par face de montage 100, 101.

Dans ce cas également, dans un mode de réalisation non limitatif, une partie des sources lumineuses 14 est adaptée pour émettre de la lumière blanche pour la réalisation de la première fonction photométrique f1 et une autre partie des sources lumineuses 14 est adaptée pour émettre de la lumière ambre pour la réalisation de la deuxième fonction photométrique f2.

Les sources lumineuses 14 sont montées ainsi directement sur une face de montage 100, 101 dudit radiateur 10 et sont connectées à ladite au moins une carte à circuit imprimé 13 au moyen d'un pontage via un fil métallique 140 (appelé également « wire bonding » en anglais).

Dans une première variante de réalisation non limitative de ce deuxième mode de réalisation, le module lumineux 1 comprend une carte à circuit imprimé 13 pour chaque groupe de sources lumineuses 14 de chaque guide de lumière 11, 12, soit deux cartes à circuit imprimé 13.

Dans cette variante, dans un premier exemple non limitatif, chaque carte à circuit imprimé 13 est montée sur une face de montage 100, 101 associée. Dans un deuxième exemple non limitatif, les deux cartes à circuit imprimé 13 sont montées sur une troisième face de montage (non illustrée) du radiateur 10 de sorte à s'étendre à distance de l'endroit vis-à-vis duquel est disposé le guide de lumière associé 11, 12.

Dans un troisième exemple non limitatif, les deux cartes à circuit imprimé 13 sont montées respectivement sur une troisième et une quatrième face de montage (non illustrée) du radiateur 10 de sorte à s'étendre à distance de l'endroit vis-à-vis duquel est disposé le guide de lumière associé 11, 12.

Dans un exemple non limitatif, le montage d'une carte à circuit imprimé 13 est effectué par collage.

Dans une deuxième variante de réalisation non limitative de ce deuxième mode de réalisation, le module lumineux 1 comprend une unique carte à circuit imprimé 13 pour l'ensemble des deux groupes de sources lumineuses 14 des guides de lumière 11, 12. Dans cette variante, dans un premier exemple non limitatif, la carte à circuit imprimé 13 est montée sur une des faces de montage 100, 101 du radiateur 10. Dans deuxième exemple non limitatif, la carte à circuit imprimé 13 est montée sur une troisième face de montage (non illustrée) du radiateur 10 de sorte à s'étendre à distance de l'endroit vis-à-vis duquel sont disposés les guides de lumière 11, 12.

### Deuxième mode de réalisation non couvert par l'invention

La figure 5 représente une vue éclatée du module lumineux 1 selon un deuxième mode de réalisation non couvert par l'invention.

Selon ce mode, le module lumineux 1 comprend en outre un élément de support 15 comprenant deux faces support 150, 151 qui se superposent respectivement sur les deux faces de montage 100, 101 dudit radiateur 10 et chaque guide de lumière 11, 12 est monté directement sur l'une desdites faces support 150, 151 de l'élément de support 15 qui lui est associée.

Ainsi, le guide de lumière 11 est monté sur la face support 150 et le guide de lumière 12 est monté sur la face support 151.

Les bases 113 et 123 des guides de lumières 11 et 12 sont directement en contact respectivement avec les faces support 150 et 151 de l'élément de support 15.

Ainsi, les faces support 150 et 151 font un angle entre elles égal à θ et les guides de lumière 11 et 12 sont montés sur le radiateur 10 au moyen de l'élément de support 15.

La figure 5 illustre également un connecteur 154 relié à une unité de commande et d'alimentation (non illustré) des sources lumineuses 14.

Dans un mode de réalisation non limitatif, chaque face support 150, 151 de l'élément de support 15 comprend un deuxième moyen de référencement 152, 153 et le moyen complémentaire de référencement 112, 122 (décrit précédemment) de chaque guide de lumière 11, 12 coopère avec le deuxième moyen de référencement 152, 153 associé.

Dans un exemple non limitatif, les deuxièmes moyens de référencement 152 et 153 sont des orifices de référencement. Plus particulièrement, le pion de référencement 112 est inséré dans l'orifice de référencement 152 de la face support 150 tandis que le pion de référencement 122 est inséré dans l'orifice de référencement 153 de la face support 151.

Ces deuxièmes moyens de référencement 152, 153 sont positionnés respectivement en regard des premiers moyens de référencement 104, 105 du radiateur 10 décrits précédemment.

Dans un mode de réalisation non limitatif, chaque face support 150, 151 de l'élément de support 15 comprend des moyens de montage 156 pour assembler ledit élément de support 15 sur le radiateur 10, lesdits moyens de montage 156 coopérant avec des moyens de montage complémentaires 107 dudit radiateur 10. Dans l'exemple non limitatif illustré, la face support 150 comprend deux moyens de montage 156a et 156b qui coopèrent respectivement avec deux moyens de montage complémentaires 107a et 107b du radiateur 10 et la face support 151 comprend deux moyens de montage 156c et 156d qui coopèrent respectivement avec deux moyens de montage complémentaires 107c et 107d du radiateur 10. Dans un exemple non limitatif, les moyens de montage 156 sont des vis et les moyens de montage complémentaires 107 sont des orifices.

Selon ce deuxième mode de réalisation illustré sur la figure 5, au moins une carte à circuit imprimé 13 forme l'élément de support 15.

Ainsi, comme on peut le voir, la carte à circuit imprimé 13 comprend deux parties qui sont les deux faces support 150 et 151 et qui sont reliées entre elles via un élément de connexion 155. Ce dernier est configuré de sorte à pouvoir régler l'angle θ entre les deux faces support 150 et 151. De cette manière, les deux faces support 150 et 151 peuvent être bien parallèles respectivement par rapport aux deux faces de montage 100 et 101 du radiateur 10.

Selon ce mode, les sources lumineuses 14 sont montées sur la carte à circuit imprimé 13. Notamment, chaque face support 150, 151 de la carte à circuit imprimé 13 comprend au moins une source lumineuse 14. Dans l'exemple non limitatif illustré, chaque face support 150, 151 comprend six sources lumineuses 14.

Ainsi, les sources de lumière 14 sont disposées sur un support commun qui est la carte à circuit imprimé 13.

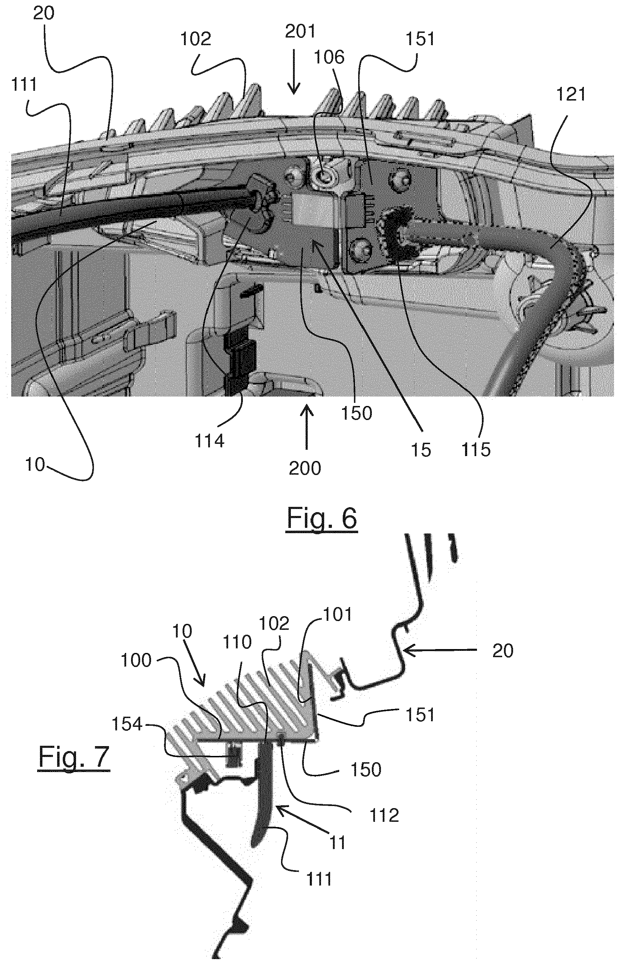

La figure 6 illustre le module lumineux 1 avec les guides de lumières 11 et 12 qui sont assemblés directement sur les faces support respectives 150 et 151 de l'élément de support 15. On peut par ailleurs voir que le module lumineux 1 est monté dans un boîtier 20 du projecteur 2, boîtier qui est décrit plus loin. Comme on peut le voir, les branches 111 et 121 des guides de lumière 11 et 12 ont des directions distinctes dans le boîtier 20 du projecteur 2.

La figure 7 illustre une vue en coupe d'une partie du module lumineux 1 intégré dans le boîtier 20 du projecteur 2. Sur cette coupe, on retrouve le guide de lumière 11 avec sa face d'entrée 110, sa branche 11 et son pion de référencement 112 inséré dans la face support 150 de l'élément de support 15 et dans la face de montage 100 du radiateur 10. La face d'entrée 110 du guide 11 est disposée parallèlement à la face support 150 de manière à coupler au mieux les rayons lumineux émis par les sources lumineuses 14. Sur la figure, on peut également voir le connecteur 154. Les deux faces support 150 et 151 sont en contact plan avec respectivement les deux faces de montage 100 et 101 du radiateur 10 dont on peut voir également les ailettes 102 qui sont situées du côté opposé aux deux faces de montage 100 et 101.

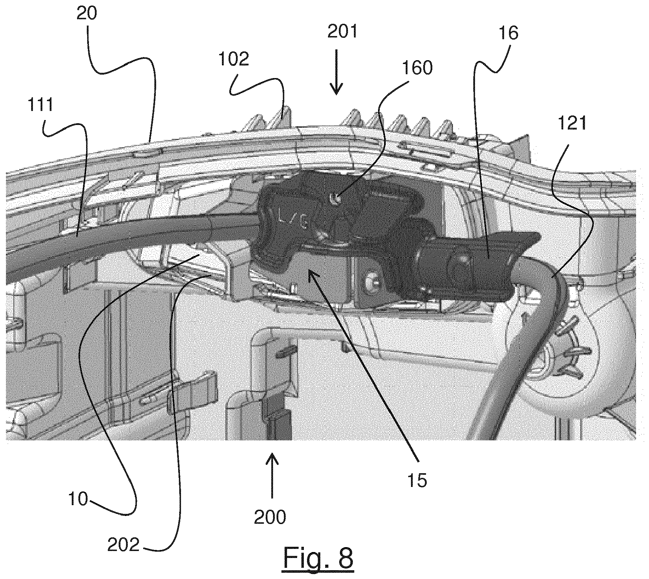

Tel qu'illustré sur la figure 8, dans un mode de réalisation non limitatif, le module lumineux 1 comprend en outre une bride de fixation 16 positionnée sur une partie des guides de lumières 11 et 12.

Dans un mode de réalisation non limitatif, la bride de fixation 16 comprend une forme qui est adaptée pour recouvrir :
- les bases 113 et 123 des guides de lumière 11 et 12 ;
- une partie des branches 111 et 121 desdits guides ;
- une partie des faces support 150 et 151 de l'élément de support 15.

Grâce à cette bride de fixation 16, les guides de lumière 11 et 12 et l'élément de support 15 sont bien fixés sur le radiateur 10.

Dans un mode de réalisation non limitatif, la bride de fixation 16 comprend un premier orifice de fixation 160 disposé en regard d'un deuxième orifice de fixation 106 dudit radiateur 10.

Une vis de montage (non illustrée) insérée dans le premier orifice de fixation 160 et dans le deuxième orifice de fixation 106 permet de fixer la bride de fixation 16 sur le radiateur 10 et ainsi de fixer l'ensemble guides de lumière 11, 12 et élément de support 15 sur le radiateur 10.

Avec la bride de fixation 16 et les pions de référencement 112, 122 insérés dans les orifices de référencement vus précédemment, l'ensemble guides de lumière 11, 12 et élément de support 15 ne peuvent plus bouger. Il n'y a ainsi aucun jeu mécanique. Les faces d'entrée 110 et 120 des guides de lumière 11 et 12 ne peuvent pas bouger. Le couplage des rayons émis par les sources lumineuses 14 ne change donc pas au cours de l'utilisation du projecteur 2.

On notera que la bride de fixation 16 peut bien entendu être utilisée dans le premier mode de réalisation du module lumineux 1 décrit précédemment (module lumineux sans l'élément de support 15).

L'invention a également pour objet un dispositif d'éclairage 2 pour véhicule automobile V comprenant un module lumineux 10 selon l'invention et un boîtier 20.

Dans un exemple non limitatif, le dispositif d'éclairage 2 est un projecteur.

Le dispositif d'éclairage 2 est décrit ci-après en référence aux figures 8 à 10. Il comprend:
- un module lumineux 1 comprenant :
   - un radiateur 10 comprenant deux faces de montage 100, 101 faisant un angle θ entre elles ;
   - au moins deux guides de lumière 11, 12, chacun comprenant une face d'entrée 110, 120 et une branche 111, 121, chaque face d'entrée 110, 120 étant disposée en regard de l'une des faces de montage 100, 101 dudit radiateur 10 et étant adaptée pour coupler les rayons lumineux émis par au moins une source lumineuse 14 dans le guide de lumière associé 11, 12 ;
- un boîtier 20 comportant une face avant 200 du côté de laquelle sont disposés les guides de lumière 11, 12 et une face arrière 201 sur laquelle est monté ledit radiateur 10, ledit boîtier 20 comportant une ouverture 202 dans laquelle sont insérées les deux faces de montage 100, 101 dudit radiateur 10 ; et
- un écran de protection (non illustré).

Ainsi, le dispositif d'éclairage 2 comprend un module lumineux 1 selon le premier mode de réalisation décrit précédemment (sans l'élément de support 15) ou selon le deuxième mode de réalisation décrit précédemment (avec l'élément de support 15).

Dans un mode de réalisation non limitatif, le radiateur 10 est monté sur le boîtier 20 au moyen de vis (non illustrées) qui sont insérées dans des orifices de montage 103 du radiateur 10 et des orifices de montage correspondant (non illustrés) sur le boîtier 20.

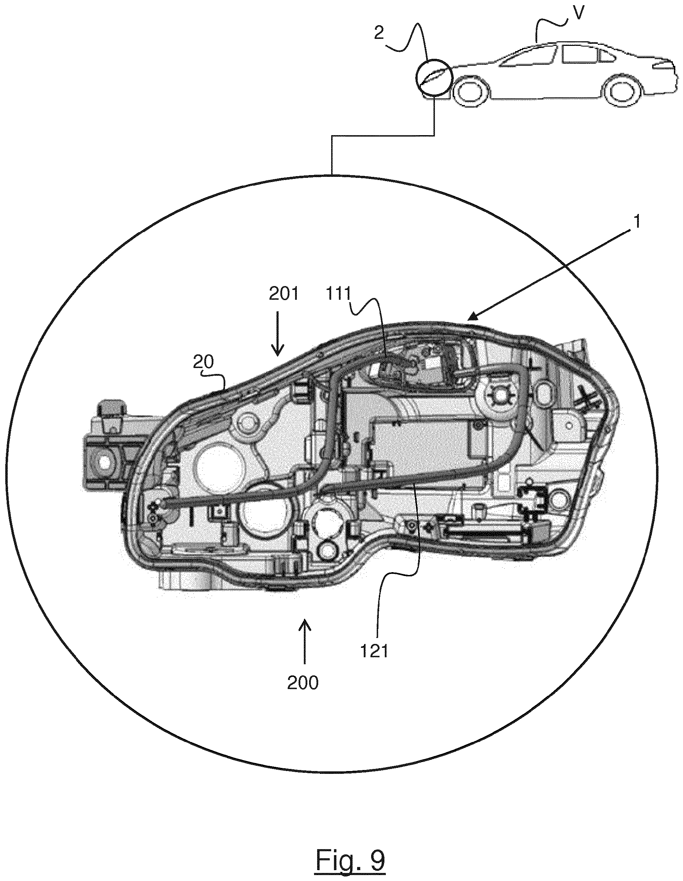

Dans l'exemple illustré non couvert par l'invention des figures 8 et 9, le module lumineux 1 est conforme au deuxième mode de réalisation décrit précédemment, à savoir le module lumineux 1 qui comprend l'élément de support 15.

Comme on peut le voir, les deux guides de lumière 11 et 12 sont séparés et les branches 111 et 121 des deux guides de lumière ont des directions différentes. Elles sont agencées dans le boitier 20 d'une manière déterminée qui est en général définie par le constructeur du véhicule automobile V.

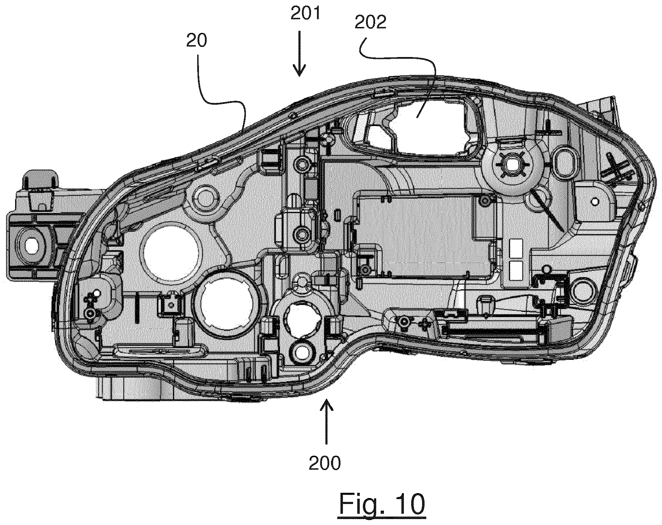

Le boîtier seul est représenté sur la figure 10. La figure 10 illustre notamment l'ouverture 202 dans laquelle viennent s'insérer les deux faces de montage 100 et 101 dudit radiateur 10.

Bien entendu la description de l'invention n'est pas limitée aux modes de réalisation décrits ci-dessus.

Ainsi, dans un mode de réalisation non limitatif, le radiateur 10 peut comporter plus de deux faces de montage.

Ainsi, dans un mode de réalisation non limitatif, le module lumineux 1 peut comporter plus de deux guides de lumière. Dans ce cas, le radiateur 10 comprend deux faces de montage ou plus de deux faces de montage en fonction de l'agencement des guides de lumière dans le projecteur 2 et de la position des faces d'entrée de chaque guide de lumière. Il en est de même pour l'élément de support 15 qui aura autant de faces support que le radiateur comprend de faces de montage.

Ainsi, dans un mode de réalisation non limitatif, on peut avoir une face de montage sur laquelle sont montés un ou plusieurs guides de lumière.

Ainsi, l'invention décrite présente notamment les avantages suivants :
- elle permet de monter (directement ou via l'élément de support 15) différents guides de lumière sur un même radiateur. Le coût est ainsi plus faible car elle utilise moins de pièces qu'une solution dans laquelle chaque guide de lumière est monté sur un radiateur différent ;
- l'assemblage des guides de lumière sur le radiateur (que ce soit directement ou par l'intermédiaire de l'élément de support 15) est simple et facile ;
- il n'est plus nécessaire d'avoir des guides de lumière avec des branches parallèles entre elles. N'importe quelle direction et agencement des guides de lumière dans le boîtier peut être réalisé tout en gardant des performances optimales en termes photométriques. On obtient ainsi plus de flexibilité pour l'agencement des guides de lumière ;
- elle permet aux sources lumineuses d'être dans l'axe Ax des guides de lumière de sorte à avoir un meilleur rendement en termes optiques. Il n'y a plus de perte de lumière au niveau des faces d'entrée des guides de lumière ; et
- elle évite de trop distordre les guides de lumière pour que leur face d'entrée puisse être positionnée correctement sur le radiateur 10, contrairement à la solution dans laquelle le radiateur 10 ne comprend qu'une seule face plane.

## Revendications

1. Module lumineux (1) pour véhicule automobile (V) comprenant :
- un radiateur (10) comprenant au moins deux faces de montage (100, 101) faisant un angle (θ) entre elles ;
- au moins deux guides de lumière (11, 12), chacun comprenant une face d'entrée (110, 120) et une branche (111, 121) ;
- au moins deux sources lumineuses (14), chacune disposée au niveau d'une desdites faces d'entrée (110, 120) des guides de lumière (10) qui lui est associé ;
dans lequel chaque face d'entrée (110, 120) est disposée en regard de l'une des faces de montage (100, 101) dudit radiateur (10) et est adaptée pour coupler les rayons lumineux émis par la source lumineuse (14) dans le guide de lumière associé (11, 12) **caractérisé en ce que** chaque guide de lumière (11, 12) est monté directement sur l'une des faces de montage (100, 101) dudit radiateur (10) qui lui est associée.

2. Module lumineux (1) selon la revendication 1, dans lequel une face d'entrée (110, 120) est disposée en regard d'une face de montage (100) dudit radiateur (10) selon un axe (Ax) sensiblement perpendiculaire à ladite face de montage (100, 101).

3. Module lumineux (1) selon l'une quelconque des revendications précédentes 1 à 2, dans lequel ledit module lumineux (1) comprend en outre au moins une carte à circuit imprimé (13) à laquelle sont connectées lesdites sources lumineuses (14).

4. Module lumineux (1) selon l'une des revendications précédentes, dans lequel ladite au moins une carte à circuit imprimé (13) est montée directement sur une face de montage (100, 101) dudit radiateur (10).

5. Module lumineux (1) selon l'une quelconque des revendications précédentes, dans lequel au moins une source lumineuse (14) est montée directement sur chaque face de montage (100, 101) dudit radiateur (10).

6. Module lumineux (1) selon l'une quelconque des revendications précédentes, dans lequel les sources lumineuses (14) sont montées sur ladite au moins une carte à circuit imprimé (13).

7. Module lumineux (1) selon l'une quelconque des revendications précédentes 1 à 6, dans lequel les sources lumineuses (14) sont des puces émettrices semi-conductrices.

8. Module lumineux (1) selon l'une quelconque des revendications précédentes 1 à 7, dans lequel chaque face de montage (100, 101) du radiateur (10) comprend un premier moyen de référencement (104, 105) et chaque guide de lumière (11, 12) comprend en outre un moyen complémentaire de référencement (112, 122) coopérant avec le premier moyen de référencement (104, 105).

9. Module lumineux (1) selon l'une quelconque des revendications précédentes, dans lequel chaque face support (150, 151) de l'élément de support (15) comprend un deuxième moyen de référencement (152, 153) et chaque guide de lumière (11, 12) comprend en outre un moyen complémentaire de référencement (112, 122) coopérant avec le deuxième moyen de référencement (152, 153).

10. Module lumineux (1) selon l'une quelconque des revendications précédentes 1 à 9, dans lequel ledit module lumineux (1) comprend en outre une bride de fixation (16) positionnée sur une partie des guides de lumière (11, 12).

11. Module lumineux (1) selon la revendication précédente, dans lequel, la bride de fixation (16) comprend un premier orifice de fixation (160) disposé en regard d'un deuxième orifice de fixation (106) dudit radiateur (10).

12. Dispositif d'éclairage (2) pour véhicule automobile (V) comprenant un module lumineux (1) selon l'une quelconque des revendications précédentes 1 à 11, et comprenant en outre un boîtier (20) comportant une face avant (200) du côté de laquelle sont disposés les guides de lumière (11, 12) et une face arrière (201) sur laquelle est monté ledit radiateur (10), ledit boîtier (20) comportant une ouverture (202) dans laquelle sont insérées les deux faces de montage (100, 101) dudit radiateur (10).

## Patentansprüche

1. Leuchtmodul (1) für ein Kraftfahrzeug (V), umfassend:
- einen Radiator (10), umfassend mindestens zwei Montageflächen (100, 101), die einen Winkel (θ) zwischen sich bilden;
- mindestens zwei Lichtwellenleiter (11, 12), jeweils umfassend eine Eintrittsfläche (110, 120) und einen Schenkel (111, 121);
- mindestens zwei Lichtquellen (14), die jeweils im Bereich einer der Eintrittsflächen (110, 120) der Lichtwellenleiter (10), die ihnen zugeordnet ist, angeordnet sind;
wobei jede Eintrittsfläche (110, 120) gegenüber einer der Montageflächen (100, 101) des Radiators (10) angeordnet und dazu vorgesehen ist, die von der Lichtquelle (14) gesandten Lichtstrahlen in dem zugeordneten Lichtwellenleiter (11, 12) zu koppeln,
**dadurch gekennzeichnet, dass** jeder Lichtwellenleiter (11, 12) direkt auf einer der Montageflächen (100, 101) des ihm zugeordneten Radiators (10) montiert ist.

2. Leuchtmodul (1) nach Anspruch 1, bei dem eine Eintrittsfläche (110, 120) gegenüber einer Montagefläche (100) des Radiators (10) entlang einer Achse (Ax) im Wesentlichen senkrecht auf die Montagefläche (100, 101) angeordnet ist.

3. Leuchtmodul (1) nach einem der vorhergehenden Ansprüche 1 bis 2, wobei das Leuchtmodul (1) ferner mindestens eine gedruckte Leiterplatte (13) umfasst, an die die Lichtquellen (14) angeschlossen sind.

4. Leuchtmodul (1) nach einem der vorhergehenden Ansprüche, bei dem die mindestens eine gedruckte Leiterplatte (13) direkt auf einer Montagefläche (100, 101) des Radiators (10) montiert ist.

5. Leuchtmodul (1) nach einem der vorhergehenden Ansprüche bei dem die mindestens eine Lichtquelle (14) direkt auf jeder Montagefläche (100, 101) des Radiators (10) montiert ist.

6. Leuchtmodul (1) nach einem der vorhergehenden Ansprüche, bei dem die Leichtquellen (14) auf der mindestens einen gedruckten Leiterplatte (13) montiert sind.

7. Leuchtmodul (1) nach einem der vorhergehenden Ansprüche 1 bis 6, bei dem die Lichtquellen (14) Halbleiter-Sendechips sind.

8. Leuchtmodul (1) nach einem der vorhergehenden Ansprüche 1 bis 7, bei dem jede Montagefläche (100, 101) des Radiators (10) ein erstes Referenzierungsmittel (104, 105) umfasst, und jeder Lichtwellenleiter (11, 12) ferner in komplementäres Referenzierungsmittel (112, 122) umfasst, das mit dem ersten Referenzierungsmittel (104, 105) zusammenwirkt.

9. Leuchtmodul (1) nach einem der vorhergehenden Ansprüche, bei dem jede Stützfläche (150, 151) des Stützelements (15) ein zweites Referenzierungsmittel (152, 153) umfasst, und jeder Lichtwellenleiter (11, 12) ferner ein komplementäres Referenzierungsmittel (112, 122) umfasst, das mit dem zweiten Referenzierungsmittel (152, 153) zusammenwirkt.

10. Leuchtmodul (1) nach einem der vorhergehenden Ansprüche 1 bis 9, wobei das Leuchtmodul (1) ferner einen Befestigungsflansch (16) umfasst, der auf einem Teil der Lichtwellenleiter (11, 12) positioniert ist.

11. Leuchtmodul (1) nach dem vorhergehenden Anspruch, bei dem der Befestigungsflansch (16) eine erste Befestigungsöffnung (160) umfasst, die gegenüber einer zweiten Befestigungsöffnung (106) des Radiators (10) angeordnet ist.

12. Beleuchtungsvorrichtung (2) für ein Kraftfahrzeug (V), umfassend ein Leuchtmodul (1) nach einem der vorhergehenden Ansprüche 1 bis 11, und umfassend ferner ein Gehäuse (20), umfassend eine Vorderseite (200), auf deren Seite die Lichtwellenleiter (11, 12) angeordnet sind, und eine Rückseite (201), auf der der Radiator (10) montiert ist, wobei das Gehäuse (20) eine Öffnung (202) umfasst, in die die zwei Montageflächen (100, 101) des Radiators (10) eingesetzt sind.

## Claims

1. Light module (1) for a motor vehicle (V) comprising:
- a heat sink (10) comprising at least two mounting faces (100, 101) forming an angle (θ) between them;
- at least two light guides (11, 12), each comprising an input face (110, 120) and a branch (111, 121);
- at least two light sources (14), each arranged at one of said input faces (110, 120) of the light guides (10) which is associated with it;
in which each input face (110, 120) is arranged facing one of the mounting faces (100, 101) of said heat sink (10) and is adapted to couple the light rays emitted by the light source (14) into the associated light guide (11, 12),
**characterized in that** each light guide (11, 12) is mounted directly on one of the mounting faces (100, 101) of said heat sink (10) which is associated with it.

2. Light module (1) according to Claim 1, in which an input face (110, 120) is arranged facing a mounting face (100) of said heat sink (10) on an axis (Ax) substantially at right angles to said mounting face (100, 101).

3. Light module (1) according to either one of the preceding Claims 1 and 2, in which said light module (1) further comprises at least one printed circuit board (13) to which said light sources (14) are connected.

4. Light module (1) according to one of the preceding claims, in which said at least one printed circuit board (13) is mounted directly on a mounting face (100, 101) of said heat sink (10).

5. Light module (1) according to any one of the preceding claims, in which at least one light source (14) is mounted directly on each mounting face (100, 101) of said heat sink (10).

6. Light module (1) according to any one of the preceding claims, in which the light sources (14) are mounted on said at least one printed circuit board (13) .

7. Light module (1) according to any one of the preceding Claims 1 to 6, in which the light sources (14) are semiconductive emitting chips.

8. Light module (1) according to any one of the preceding Claims 1 to 7, in which each mounting face (100, 101) of the heat sink (10) comprises a first referencing means (104, 105) and each light guide (11, 12) further comprises a complementary referencing means (112, 122) cooperating with the first referencing means (104, 105).

9. Light module (1) according to any one of the preceding claims, in which each support face (150, 151) of the support element (15) comprises a second referencing means (152, 153) and each light guide (11, 12) further comprises a complementary referencing means (112, 122) cooperating with the second referencing means (152, 153).

10. Light module (1) according to any one of the preceding Claims 1 to 9, in which said light module (1) further comprises a fixing clamp (16) positioned over a part of the light guides (11, 12).

11. Light module (1) according to the preceding claim, in which the fixing clamp (16) comprises a first fixing orifice (160) arranged facing a second fixing orifice (106) of said heat sink (10).

12. Lighting device (2) for a motor vehicle (V) comprising a light module (1) according to any one of the preceding Claims 1 to 11, and further comprising a casing (20) comprising a front face (200) on the side of which are arranged the light guides (11, 12) and a rear face (201) on which is mounted said heat sink (10), said casing (20) comprising an opening (202) into which are inserted the two mounting faces (100, 101) of said heat sink (10).
